# EUROPEAN PATENT SPECIFICATION

(11) **EP 0 650 563 B1**
(45) Date of publication and mention of the grant of the patent: **10.12.1997**
(21) Application number: 94916461.0
(22) Date of filing: 17.05.1994
(51) Int. Cl.: F16F 15/30, F16D 3/14

(54) **DUAL MASS FLYWHEEL**
ZWEI-MASSEN-SCHWUNGRAD
VOLANT A DOUBLE MASSE

(30) Priority: 19.05.1993 SE 9301718
(43) Date of publication of application: 03.05.1995
(73) Proprietor: SCANIA CV AKTIEBOLAG, S-151 87 Södertälje (SE)
(72) Inventor: NORDKVIST, Johan, S-151 35 Södertälje (SE)
(74) Representative: Holmborn, Erland Karl
(86) International application number: SE9400457
(87) International publication number: WO9427062

(56) References cited:
- GB-A- 1 230 284
- GB-A- 2 240 380
- US-A- 4 638 684
- US-A- 4 856 636

## Description

### State of the art

The present invention refers to a dual mass flywheel of the kind indicated in the preamble to Claim 1.

Such a flywheel is shown in US 4 856 636 where the two flywheel bodies also are connected via a friction device including radially directed spring elements. The friction device is designed to be disconnected at high rpms where centrifugal force exceeds the spring forces.

Drive transmission from the second flywheel body to the clutch shaft takes place via a clutch carrier or clutch disc which is locked against rotation (but not against axial movement) on the clutch shaft and which has clutch linings (friction linings) which can be pressed against a face-ground surface on the second flywheel body by means of a pressure plate.

Dual mass flywheels of this kind for passenger cars are known of prior art. They involve designs whereby the two flywheel bodies (centrifugal masses) are connected by tangentially directed springs.

An example of such a known technique which may be referred to is DE 3 807 133. according to which the two coaxial portions of the flywheel are connected by tangentially directed coil springs. A further example which may be mentioned is DE 3 743 634, which describes a vibration damper disposed between a pair of flywheel masses which are connected respectively to the engine and the gearbox. The damper includes springs which are disposed and effective in a tangential direction.

Disposing these springs thus tangentially is natural, since the springs are oriented to absorbing forces in their effective longitudinal directions. On heavy duty vehicles with engines usually dimensioned for producing ever greater torque while at the same time being run at ever slower rotation speeds, there is an increasing need for effective vibration damping. This involves ever increasing numbers of springs despite the limited space along the flywheel periphery.

The disadvantages of the known designs thus include bulkiness and the fact that complicated technical solutions have to be resorted to for achieving desired spring characteristics.

### Object of the invention

The object of the invention is to create a new improved type of dual mass flywheel whereby the aforesaid disadvantages can be avoided. The new dual mass flywheel will be particularly suitable for eliminating or at least minimising the problem of severe vibrations arising from low engine speed and high torque in engines both for heavy duty vehicles and for passenger cars.

### Summary of the invention

The aforesaid object is achieved according to the invention by the dual mass flywheel exhibiting the features indicated in the characterising portion of claim 1.

Such a dual mass flywheel is distinguished by the fact that the springs engaged between the flywheel bodies are directed at least substantially radially with respect to the flywheel shaft and preferably have their radially inner ends pivotingly attached to one of the flywheel bodies and their radially outer ends pivotingly attached to the other flywheel body.

Such a flywheel makes it possible to maintain small dimensions, which is particularly desirable and important for efficient use of the allocated space. The development of new vehicle models in particular now always involves a definite endeavour to create within the given external dimensions of the bodywork the largest possible "useful spaces" such as interior and baggage spaces in passenger cars and load spaces in trucks, and this is of course partly achieved at the expense of the space which can be devoted to accommodating the engine, the gearbox and sundry supplementary or extra equipment. Space problems are also exacerbated by often simultaneously using ever more powerful engines which usually have larger dimensions.

A dual mass flywheel according to the invention also has the advantage of making it possible to achieve the desired continuous spring characteristic. Radially directed springs according to the invention result in a tangential force component due to the changed leverage which occurs during mutual angular movement (i.e. rotation) between the two flywheel bodies.

Particularly good conditions for the desired continuous spring characteristic can be achieved with a dual mass flywheel which has the features indicated respectively in claims 2 and 3.

A centrifugal clutch according to claims 2 and 3 functions as a kind of "inverted centrifugal clutch", which means that the flywheel bodies are locked together by friction at low engine speeds but frictionally disengaged from one another at high engine speeds. Dual mass flywheels whereby the flywheel bodies are mutually connected by means of a brake are certainly known, but such a version has the disadvantage of providing the same braking torque at all engine speeds.

A dual mass flywheel according to the invention also eliminates the need for there to be a clutch carrier (i.e. a clutch disc or plate) with tangentially directed springs fitted in the hub inter alia to absorb any jerking when the clutch pedal is released. Since a dual mass flywheel according to the invention thus eliminates the need for such a resilient hub, the clutch carrier (disc plate) may take the form of a "rigid" structure, thereby making its manufacture simpler and less expensive.

It is advantageous for the two flywheel bodies to be designed and assembled together as indicated respectively in claims 5 and 8. The radial springs are thereby preferably disposed starwise around the hub portion of the first flywheel body and around the socket-like hub of the second flywheel body mounted on that hub portion. The springs are mutually identical and have at both their ends anchoring devices mounted on bearing pins which are fixed in the respective flywheel discs.

The centrifugal clutch situated between radially inner parts of the flywheel bodies incorporates preferably a circular groove of wedge-shaped cross-section on the outside of the socket-like hub of the second flywheel body, and a pair of arcuate brake shoe devices which engage with the groove and follow one another in the circumferential direction of the groove. Each of the brake shoe devices has one of its ends mounted for swivelling on a peg fixed in the flywheel disc of the first flywheel body, while its other end is spring-prestressed in the direction of the bearing peg of the second brake shoe device. At least part of the longitudinal extent of the brake shoe devices is provided with friction linings on its side surfaces capable of being pressed against the sidewalls of the groove.

### Brief description of the drawings

The invention will now be described below and explained further with reference to an embodiment illustrated in the accompanying diagrams.

Fig. 1 shows an axial section through a dual mass flywheel with relating clutch arrangement.

Fig. 2 shows an axial view of one of the flywheel bodies with relating spring assembly and centrifugal clutch.

Fig. 3 shows a sectional view through a spring assembly in the dual mass flywheel.

Fig .4 shows a diagram of the rotation torque created between the two flywheel bodies by the radial springs as a function of the separate angle of rotation (angular displacement) between these bodies.

### Description of an embodiment

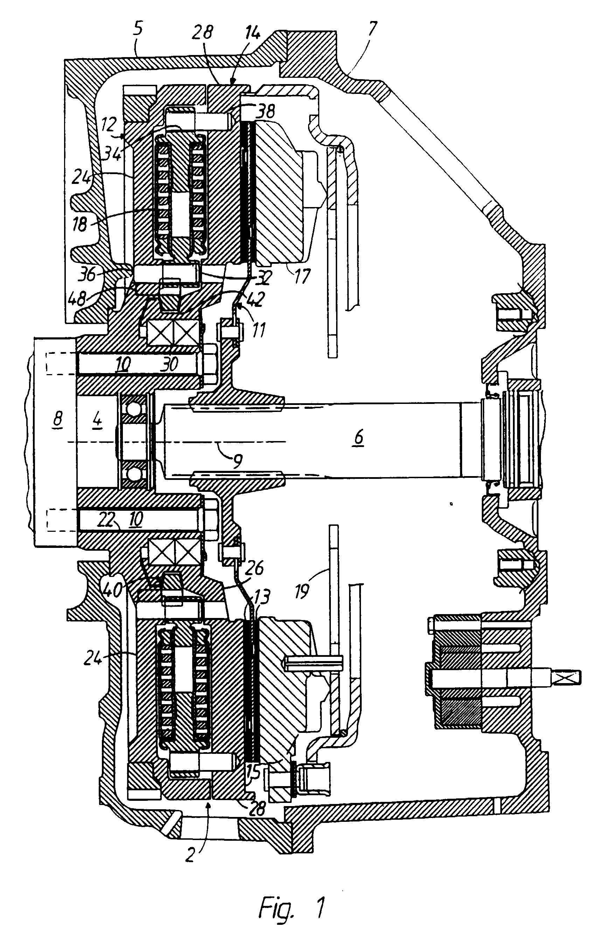

A dual mass flywheel 2 according to the invention forms part of the drive transmission between the crankshaft 4 of the internal combustion engine of a vehicle, e.g. a diesel engine of a truck, and a clutch shaft 6 which can be connected to the crankshaft 4 and constitutes the input shaft to a gearbox. The central hub portion of the flywheel 2 is attached to the end flange 8 of the crankshaft by means of a number of bolts 10. As illustrated in Fig.1, the flywheel 2 incorporates a first flywheel body 12 which is drivingly connected to the crankshaft 4 and a second flywheel body 14 arranged for rotation with respect to the first flywheel body 12, to which it is connected by fourteen spring assemblies 16 provided for elastically damping relative movement between the two flywheel bodies 12, 14. The dual mass flywheel 2 is surrounded by a flywheel housing 5 to which is attached a clutch housing 7 which surrounds the clutch and its release bearing (not depicted). The clutch includes a clutch carrier (clutch disc) 11 which is locked against rotation (but is axially displaceable) on the clutch shaft 6 via a hub 3 and splines and which has friction linings 13 which can be pressed against the face-ground surface 15 on the second flywheel body 14 by means of the circular pressure plate 17. The pressure plate 17 is acted upon in its turn by a disc spring 19.

Dual mass flywheels are dimensioned so that the first flywheel body is optimally tuned to counteract the vibrations which may be generated by the engine. while the second body is optimally tuned with respect to vibrations generated not only by the engine but also by the intermediate springs and the remainder of the driveline in the form of gearbox, propeller shaft and drive shafts. This usually means that the flywheel bodies are of approximately equal weight.

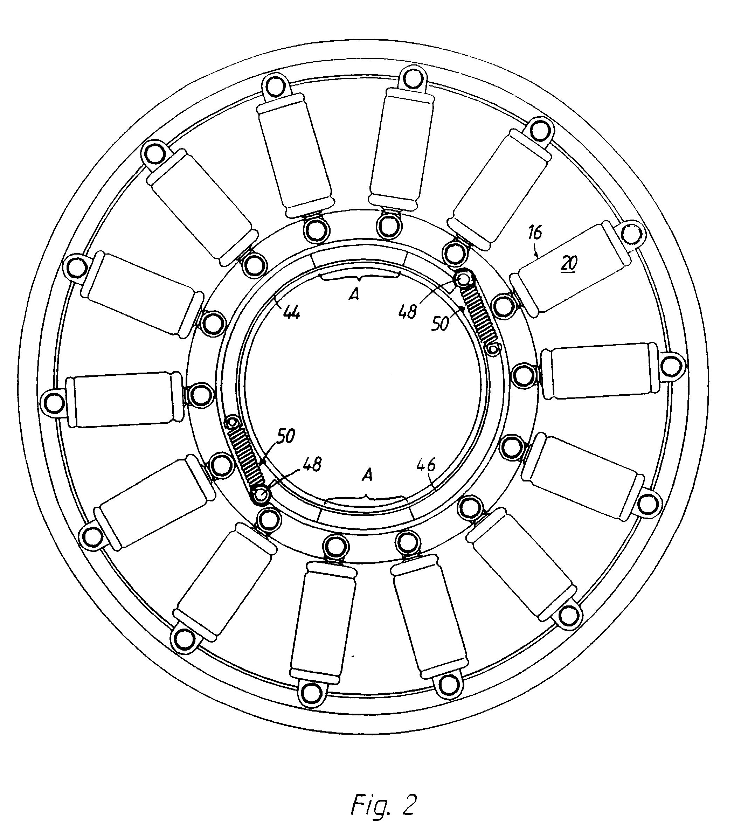

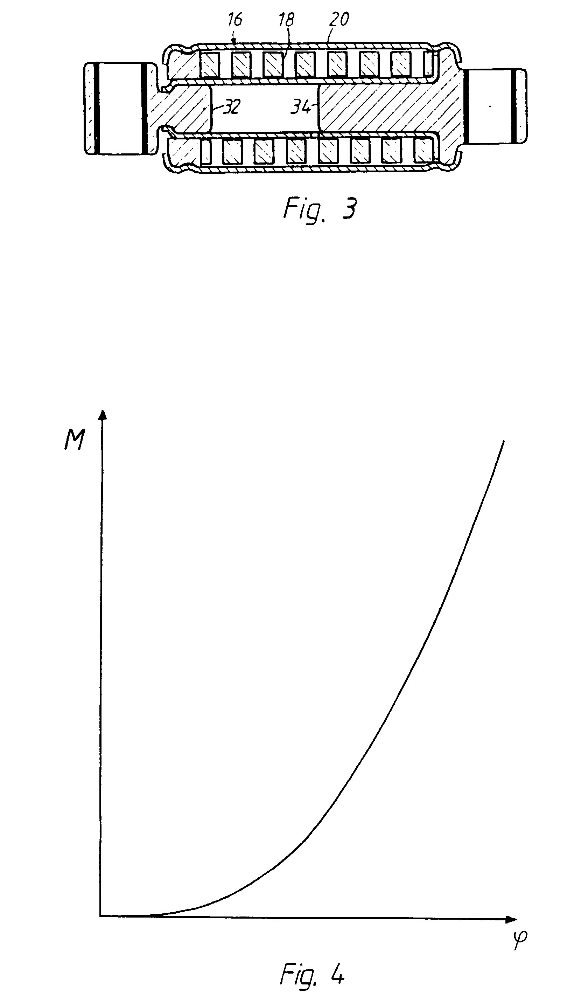

As illustrated in Fig.2, the spring assemblies 16 are disposed starwise around the hub portion of the flywheel 2 and directed radially with respect to the symmetry axis 9 of the flywheel 2. In the version depicted, each spring assembly 16 takes the form of a coil spring 18 provided with a surrounding casing 20 as shown in detail in Figure 3. The springs 18 are thus directly mechanically engaged between the flywheel bodies 12, 14 and each spring is stressed as a compression spring. They have greater resistance than tension springs, a fact which may be desirable in applications where powerful forces and torques occur, as in transmissions for trucks and other heavy duty vehicles.

When no torque is transmitted between the two flywheel bodies 12, 14, as for example when the engine is not running, the springs 18 engaged between the flywheel bodies are directed substantially radially between the flywheel bodies. The springs 18 have their radially inner ends pivotingly attached to the first flywheel body 12 and their radially outer ends pivotingly attached to the second flywheel body 14. The springs 18 are designed and dimensioned to maintain a certain prestress even when they are minimally extended, which is the case when they extend exactly radially between the flywheel bodies, as in Fig.2.

The first flywheel body 12 has a hub portion 22 to which a flywheel disc 24 is firmly connected. It is advantageous for the hub portion 22 and the flywheel disc 24 to be designed as a single element. The second flywheel body 14 incorporates in its turn, in its radially inner part, a socket-like hub 26 which is mounted on the outside of the hub portion 22 and merges at one end with a flywheel disc 28 which is parallel to the flywheel disc 24. The hub 26 of the second flywheel body 14 is mounted on the hub portion 22 of the first flywheel body 12 by means of a roller bearing 30, such as a double-row ball-bearing.

As illustrated in Fig.1, the two flywheel discs 24, 28 delineate between them an annular space which accommodates the radial spring assemblies 16. The radial springs 18 in the spring assemblies 16 are mutually identical and have anchoring devices 32, 34 at their respective inner and outer ends. These anchoring devices are mounted on bearing pins 36, 38 fixed respectively in the flywheel disc 24 and the flywheel disc 28.

In addition to being connected by the spring assemblies 16 (i.e. the radial springs 18), the flywheel bodies 12 and 14 are in certain operating situations connected together via a centrifugal clutch 40 situated between radially inner parts of the flywheel bodies 12, 14. The purpose of this centrifugal clutch 40 is to keep the flywheel bodies locked together by friction at low engine speeds but frictionally disengaged from one another at higher engine speeds owing to increased centrifugal force.

It is thus at low engine speeds, as when starting and stopping, that the greatest friction force occurs between the two flywheel bodies 12, 14, which is desirable in appreciably reducing the risk of resonance vibrations in the dual mass flywheel 2 in the initial stage of separate rotation of the flywheel bodies. With increasing engine speed, the centrifugal clutch 40 progressively reaches a position in which it is fully disengaged.

The centrifugal clutch 40 incorporates a circular groove 42 on the outside of the socket-like hub 26 of the second flywheel body 14. This groove exhibits preferably a wedge-shaped cross-section. The centrifugal clutch 40 also has on a pair of arcuate brake shoe devices which engage in the groove 42 and follow one another in the circumferential direction of the groove. Via a bearing lug (not depicted) one end of each of the bearing shoe devices 44, 46 is mounted for swivelling on a peg 48 fixed in the flywheel disc 24 of the first flywheel body 12, while their other end is spring-prestressed in the direction of the bearing peg 48 of the second brake shoe device by means of a tension coil spring 50.

At least part of the two brake shoe devices 44, 46, i.e. a portion A of their longitudinal extent, is provided on their side surfaces with friction linings capable of being pressed against the sidewalls 42 of the groove.

The spring characteristic of the radially directed springs 18 will now be illustrated indirectly by reference to the joint torque between the flywheel bodies 12 and 14 created by the action of these springs during mutually separate rotation or angular displacement between these bodies. Reference is made here to Fig.4 which depicts in diagram form the torque M as a function of the angle of rotation ϕ between the flywheel bodies. As illustrated in Fig.4, the torque M increases with increasing angle ϕ in a parabola-like pattern due to purely geometrical relationships. In the initial stage of relative rotation between the flywheel bodies 12, 14 the spring assemblies 16 are directed almost exactly radially, so their force component in the tangential direction is still insignificant and therefore only gives rise to a very limited torque M. Progressively as the angle ϕ increases, the torque M also begins to increase ever faster. This is obviously due to the spring assemblies 16 giving rise to a rapidly increasing tangential force component progressively as the spring assemblies "tilt" increasingly away from their purely radial initial position. The result is a progressively increasing torque M despite the springs themselves possibly having linear spring characteristics.

The embodiment described above may not impose any limitation upon the invention. which may obviously be implemented in a number of alternative forms without departing from the concept of the invention. For example, the form and positioning of the centrifugal clutch may be varied.

## Claims

1. Dual mass flywheel (2) which forms part of the drive transmission between the crankshaft (4) of a vehicle's internal combustion engine and a clutch shaft (6) connectable to the crankshaft (4), which flywheel (2) comprises a first flywheel body (12) drivingly connected to the engine crankshaft (4), and a second flywheel body (14) which is arranged for rotation with respect to the first flywheel body (12) and is connected thereto by springs (18) provided for elastically damping relative rotational movement of the two flywheel bodies, the second flywheel body (14) being arranged for connection to the clutch shaft (6) by means of a friction clutch, and the springs (18) being directly mechanically engaged as compression springs between the flywheel bodies (12, 14), *characterised in* that the compression springs (18) are directed substantially radially with respect to the symmetry axis (9) of the flywheel (2).

2. Dual mass flywheel according to claim 1, *characterised in* that the springs (18) engaged between the flywheel bodies (12, 14) have their radially inner ends pivotingly attached to the first flywheel body (12) and their radially outer ends pivotingly attached to the second flywheel body (14).

3. Dual mass flywheel according to claim 1 or 2, *characterised in* that there is a centrifugal clutch (40) between the two flywheel bodies (12, 14) which serves to keep the flywheel bodies locked together by friction at lower engine speeds and to keep them frictionally disengaged from one another at higher engine speeds.

4. Dual mass flywheel according to any one of the foregoing claims, *characterised in* that the springs (18) are cylindrical coil springs which are so accommodated between the flywheel bodies (12, 14) as to maintain a certain prestress in the springs (18) even when they are radially positioned between the flywheel bodies (12, 14), as when there is no torque transmission between the latter.

5. Dual mass flywheel according to any of the foregoing claims, *characterised in* that the first flywheel body (12) comprises a hub portion (22) and a flywheel disc (24) which is firmly connected thereto and is perpendicular to the axis of the flywheel (2), and that the second flywheel body (14) has in its radially inner part a socket-like hub (26) which is mounted on the outside of the hub portion (22) of the first flywheel body and has attached to one end of it a flywheel disc (28) which is parallel to the flywheel disc (24) of the first flywheel body.

6. Dual mass flywheel according to claim 5, *characterised in* that the two flywheel discs (24, 28) delineate between them an annular space in which the radial springs (18) are accommodated starwise around the hub portion (22) and the hub (26).

7. Dual mass flywheel according to any one of the foregoing claims, *characterised in* that the radial springs (18) are mutually identical and have at each of their ends anchoring devices (32, 34) which are rotatably fixed in the respective flywheel discs (24, 28).

8. Dual mass flywheel according to claim 5 or 6, *characterised in* that the socket-like hub (26) of the second flywheel body (14) is mounted externally on the hub portion (22) of the first flywheel body (12), preferably by means of a rolling bearing (30).

9. Dual mass flywheel according to any one of claims 5-8, *characterised* in that the centrifugal clutch (40) comprises a circular groove (42), preferably of wedge-shaped cross-section, on the outside of the socket-like hub (26) of the second flywheel body (14), and a pair of arcuate brake shoe devices (44, 46) which engage in the groove and follow one another in the circumferential direction of the groove, and each brake shoe device has one end mounted for swivelling on a peg (48) fixed in the flywheel disc (24) of the first flywheel body (12), while their other end is spring-prestressed (50) towards the bearing peg (48) of the second brake shoe device.

10. Dual mass flywheel according to claim 9, *characterised in* that a part (A) of the longitudinal extent of the brake shoe devices (44, 46) is provided on their side surfaces with friction linings capable of being pressed against the sidewalls of the groove (42).

## Patentansprüche

1. Zweimassenschwungrad (2), das einen Teil der Kraftübertragung zwischen der Kurbelwelle (4) eines Fahrzeugverbrennungsmotors und einer mit der Kurbelwelle (4) verbindbaren Kupplungswelle (6) bildet, wobei das Schwungrad (2) einen ersten Schwungradkörper (12), der zu gemeinsamer Bewegung mit der Motorkurbelwelle (4) verbunden ist, und einen zweiten Schwungradkörper (14) aufweist, der zur Drehung bezüglich des ersten Schwungradkörpers (12) angeordnet und mit diesem durch Federn (18) verbunden ist, welche zum elastischen Dämpfen einer Relativdrehbewegung der beiden Schwungradkörper vorgesehen sind, und wobei der zweite Schwungradkörper (14) zur Verbindung mit der Kupplungswelle (6) mittels einer Reibkupplung angeordnet ist und die Federn (18) sich als Kompressionfedern mechanisch direkt zwischen den Schwungradkörpern (12, 14) in Eingriff befinden,
dadurch gekennzeichnet, daß die Kompressionsfedern (18) bezüglich der Symmetrieachse (9) des Schwungrades (2) im wesentlichen radial gerichtet sind.

2. Zweimassenschwungrad nach Anspruch 1,
dadurch gekennzeichnet, daß die sich zwischen den Schwungradkörpern (12, 14) in Eingriff befindenden Federn (18) ihre radial inneren Enden schwenkbar am ersten Schwungradkörper (12) und ihre radial äußeren Enden schwenkbar am zweiten Schwungradkörper (14) angebracht haben.

3. Zweimassenschwungrad nach Anspruch 1 oder 2,
dadurch gekennzeichnet, daß sich zwischen den beiden Schwungradkörpern (12, 14) eine Zentrifgualkupplung (40) befindet, die dazu dient, die Schwungradkörper bei niedrigeren Motordrehzahlen durch Reibung zu koppeln und bei höheren Motordrehzahlen frei von gegenseitigem Reibungseingriff zu halten.

4. Zweimassenschwungrad nach einem der vorhergehenden Ansprüche,
dadurch gekennzeichnet, daß die Federn (18) zylindrische Schraubenfedern sind, die so zwischen den Schwungradkörpern (12, 14) aufgenommen sind, daß eine gewisse Vorspannung in den Federn (18) selbst dann aufrecht erhalten bleibt, wenn sie radial zwischen den Schwungradkörpern (12, 14) positioniert sind, beispielsweise wenn keine Drehmomentübertragung zwischen letzteren stattfindet.

5. Zweimassenschwungrad nach einem der vorhergehenden Ansprüche,
dadurch gekennzeichnet, daß der erste Schwungradkörper (12) einen Nabenabschnitt (22) und eine fest damit verbundene Schwungradscheibe (24) aufweist, die rechtwinklig zur Achse des Schwungrades (2) verläuft, und daß der zweite Schwungradkörper (14) an seinem radial inneren Teil eine buchsenartige Nabe (26) aufweist, die auf der Außenseite des Nabenabschnitts (22) des ersten Schwungradkörpers befestigt ist und an deren einem Ende eine Schwungradscheibe (28) angebracht ist, die parallel zur Schwungradscheibe (24) des ersten Schwungradkörpers verläuft.

6. Zweimassenschwungrad nach Anspruch 5,
dadurch gekennzeichnet, daß die zwei Schwungradscheiben (24, 28) zwischen sich einen ringförmigen Raum begrenzen, in dem die radialen Federn (18) sternförmig um den Nabenabschnitt (22) und die Nabe (26) herum aufgenommen sind.

7. Zweimassenschwungrad nach einem der vorhergehenden Ansprüche,
dadurch gekennzeichnet, daß die radialen Federn (18) jeweils identisch sind und an jedem ihrer Enden Verankerungseinrichtungen (32, 34) aufweisen, die drehbar in den entsprechenden Schwungradscheiben (24, 28) befestigt sind.

8. Zweimassenschwungrad nach Anspruch 5 oder 6,
dadurch gekennzeichnet, daß die buchsenartige Nabe (26) des zweiten Schwungradkörpers (14) außerhalb auf dem Nabenabschnitt (22) des ersten Schwungradkörpers (12) angebracht ist, vorzugsweise mittels eines Wälzlagers (30).

9. Zweimassenschwungrad nach einem der Ansprüche 5 bis 8,
dadurch gekennzeichnet, daß die Zentrifugalkupplung (40) auf der Außenseite der buchsenartigen Nabe (26) des zweiten Schwungradkörpers (14) eine kreisringförmige Nut (42) von vorzugsweise keilförmigem Querschnitt und ein Paar gekrümmter Bremsschuheinrichtungen (44, 46) aufweist, die in die Nut eingreifen und einander in Umfangsrichtung der Nut folgen, wobei ein Ende jeder Bremsschuheinrichtung zum Schwenken auf einem in der Schwungradscheibe (24) des ersten Schwungradkörpers (12) befestigten Stift (48) angebracht ist, während das andere Ende in Richtung auf den Lagerstift (48) der zweiten Bremsschuheinrichtung federvorgespannt (50) ist.

10. Zweimassenschwungrad nach Anspruch 9,
dadurch gekennzeichnet, daß ein Teil (A) der Längserstreckung der Bremsschuheinrichtungen (44, 46) auf ihren Seitenflächen mit Reibbelägen versehen ist, die gegen die Seitenwände der Nut (42) gepreßt werden können.

## Revendications

1. Volant à deux masses (2) qui fait partie de la transmission de la force motrice entre le vilebrequin (4) d'un moteur à combustion interne de véhicule et un arbre d'embrayage (6) pouvant être relié au vilebrequin (4), lequel volant (2) comprend un premier corps de volant (12) relié en entraînement au vilebrequin (4) du moteur, et un second corps de volant (14) qui est conçu pour tourner par rapport au premier corps de volant (12) et est relié à celui-ci par des ressorts (18) assurant l'amortissement élastique du mouvement de rotation relatif des deux corps de volant, le second corps de volant (14) étant agencé pour être relié à l'arbre d'embrayage (6) au moyen d'un embrayage à friction, et les ressorts (18) étant directement montés de façon mécanique, en tant que ressorts de compression, entre les corps de volant (12, 14), caractérisé en ce que les ressorts de compression (18) sont orientés de façon sensiblement radiale par rapport à l'axe de symétrie (9) du volant (2).

2. Volant à deux masses selon la revendication 1, caractérisé en ce que les ressorts (18) montés entre les corps de volant (12, 14) ont leurs extrémités radialement intérieures fixées de façon pivotante au premier corps de volant (12) et leurs extrémités radialement extérieures fixées de façon pivotante au second corps de volant (14).

3. Volant à deux masses selon la revendication 1 ou 2, caractérisé en ce qu'un embrayage centrifuge (40) est disposé entre les deux corps de volant (12, 14) et sert à maintenir les corps de volant verrouillés ensemble par frottement à bas régime du moteur, et à les maintenir hors de contact frottant l'un avec l'autre aux régimes plus élevés du moteur.

4. Volant à deux masses selon l'une quelconque des revendications précédentes, caractérisé en ce que les ressorts (18) sont des ressorts hélicoïdaux cylindriques qui sont logés entre les corps (12, 14) du volant de manière à maintenir une certaine précontrainte dans les ressorts (18) même quand ils sont positionnés radialement entre les corps (12, 14) du volant, de même que lorsqu'il n'y a pas de transmission de couple entre ces derniers.

5. Volant à deux masses selon l'une quelconque des revendications précédentes, caractérisé en ce que le premier corps (12) du volant comprend une partie de moyeu (22) et un disque de volant (24) qui est relié de façon fixe à celle-ci, et est perpendiculaire à l'axe du volant (2), et en ce que le second corps (14) du volant comporte, dans sa partie radialement intérieure, un moyeu en forme de douille (26) qui est monté sur l'extérieur de la partie de moyeu (22) du premier corps du volant, et qui comporte, fixé à une extrémité de celui-ci, un disque de volant (28) qui est parallèle au disque de volant (24) du premier corps du volant.

6. Volant à deux masses selon la revendication 5, caractérisé en ce que les deux disques (24, 28) du volant définissent entre eux un espace annulaire dans lequel les ressorts (18) radiaux sont disposés en étoile autour de la partie de moyeu (22) et le moyeu (26).

7. Volant à deux masses selon l'une quelconque des revendications précédentes, caractérisé en ce que les ressorts (18) radiaux sont tous identiques et comportent, au niveau de chacune de leurs extrémités, des dispositifs d'ancrage (32, 34) qui sont fixés avec faculté de rotation dans les disques (24, 28) respectifs du volant.

8. Volant à deux masses selon la revendication 5 ou la revendication 6, caractérisé en ce que le moyeu (26) en forme de douille du second corps (14) du volant est monté de façon extérieure sur la partie de moyeu (22) du premier corps (12) du volant, de préférence au moyen d'un roulement (30).

9. Volant à deux masses selon l'une quelconque des revendications 5 à 8, caractérisé en ce que l'embrayage centrifuge (40) comprend une gorge circulaire (42), de section transversale de préférence en forme de coin, sur l'extérieur du moyeu (26) en forme de douille du second corps (14) du volant, et une paire de dispositifs de patin de frein incurvés (44, 46) qui s'engagent dans la gorge, et se suivent dans la direction circonférencielle de la gorge, et en ce que chaque dispositif de patin de frein comporte une première extrémité montée de façon pivotante sur une broche (48) fixée dans le disque (24) de volant du premier corps (12) du volant, tandis que son autre extrémité est préchargée par ressort (50) en direction de la broche de montage (48) du second dispositif de patin de frein.

10. Volant à deux masses selon la revendication 9, caractérisé en ce qu'une partie (A) de l'étendue longitudinale des dispositifs à patin de frein (44, 46) est munie, sur ses surfaces latérales, de garnitures de friction pouvant être pressées contre les parois latérales de la gorge (42).
